# FASCICULE DE BREVET EUROPEEN

(11) **EP 3 589 534 B1**
(45) Date de publication et mention de la délivrance du brevet: **21.04.2021**
(21) Numéro de dépôt: 18709684.7
(22) Date de dépôt: 22.02.2018
(51) Int. Cl.: B62D 25/08, B62D 21/15

(54) **DISPOSITIF D'ABSORPTION POUR POUTRE CENTRALE DE CHASSIS ARRIERE DE VEHICULE**
ABSORPTIONSEINRICHTUNG FÜR ZENTRALENTRÄGER DES HINTEREN FAHRZEUGCHASSIS
ABSORPTION DEVICE FOR THE CENTRAL BEAM OF REAR VEHICLE CHASSIS

(30) Priorité: 02.03.2017 FR 1751705
(43) Date de publication de la demande: 08.01.2020
(73) Titulaire: PSA Automobiles SA, 78300 Poissy (FR)
(72) Inventeur: BENANE, Said, 94550 Chevilly Larue (FR)
(86) Numéro de dépôt international: PCT/FR2018/050416
(87) Numéro de publication internationale: WO 2018/158523

(56) Documents cités:
- EP-A1- 1 424 266
- EP-A2- 0 968 904
- DE-A1-102004 061 707
- US-A- 5 507 522

## Description

L'invention se situe dans le domaine des châssis arrière de véhicule et concerne plus particulièrement un dispositif associé à la poutre centrale de tels châssis.

Le châssis arrière d'un véhicule est une structure inférieure qui en supporte la partie arrière. Ce dernier se compose généralement de deux poutres latérales s'étendant selon la direction longitudinale du véhicule et reliées entre elles par au moins deux traverses. L'espace du véhicule défini et supporté par ces deux traverses correspond généralement au coffre, mais peut également correspondre à la benne d'un véhicule de type pick-up comme décrit dans le document EP 0723904. Le châssis arrière est fermé en partie inférieur par un plancher inférieur.

Lors d'un choc à l'arrière du véhicule, le châssis arrière va être amené à se déformer en direction de l'avant et en particulier la traverse proche des extrémités arrière des poutres latérales. Cette déformation va entrainer une intrusion dans l'habitacle d'éléments qui risquent alors de blesser des passagers assis à l'arrière. De manière à limiter cette intrusion, un dispositif d'absorption de choc peut être présent au niveau du châssis arrière et comprend de manière connue une poutre centrale reliant les deux traverses arrière. Cette poutre centrale absorbe l'énergie du choc grâce à une déformation longitudinale.

Un tel dispositif est présenté par exemple par le document US 6206461 et consiste en une poutre centrale dont l'extrémité avant s'évase progressivement et l'extrémité arrière s'élargit de manière étagée. La configuration de cette poutre centrale lui assure de bons appuis contre chaque traverse. En outre, la poutre centrale peut être munie à l'une ou l'autre de ses extrémités d'un système d'articulation, permettant de l'entrainer en rotation autour de l'une ou de l'autre des traverses auxquelles elle est fixée. La mise en mouvement dudit système d'articulation permet d'accéder facilement à une roue de secours du véhicule placée soit au-dessus, soit en dessous de la poutre centrale.

Lorsque la poutre centrale se déforme pour absorber l'énergie du choc arrière, elle peut transmettre des efforts au plancher inférieur qui sont susceptibles de le casser, notamment lorsqu'il est formé en matériau composite. Il serait donc intéressant de limiter les risques d'endommagement du plancher inférieur résultant de la déformation de la poutre centrale du châssis arrière.

L'invention a pour objectif de répondre à au moins un des problèmes soulevés dans l'art antérieur en proposant un dispositif de limitation des transmissions d'efforts depuis la poutre centrale vers le plancher inférieur lorsque cette dernière se déforme suite à un choc arrière subi par le véhicule.

A cet effet, l'invention a pour objet un véhicule comprenant un châssis arrière présentant deux poutres latérales orientées selon la direction longitudinale du véhicule et reliées entre elles par au moins deux traverses réparties selon la direction longitudinale du véhicule, les deux traverses les plus en arrière étant reliées entre elles par une poutre centrale, et l'espace défini par les traverses et les poutres latérales étant fermé en partie inférieure par un plancher inférieur, le véhicule étant remarquable en ce qu'il comprend en outre un dispositif d'absorption disposé entre la poutre centrale et le plancher inférieur et comprenant au moins un absorbeur.

Comme on l'aura compris à la lecture de la définition qui vient d'en être donnée, l'invention permet selon un premier aspect d'absorber les efforts provenant de la poutre centrale en direction du plancher inférieur en positionnant au moins un absorbeur entre la poutre centrale et le plancher inférieur. Lors de la déformation de la poutre centrale, les absorbeurs vont d'une part absorber au moins en partie les efforts en s'écrasant entre la poutre et le plancher et d'autre part mieux répartir la transmission des efforts résiduels vers ledit plancher. Les risques d'endommagement du plancher sont ainsi réduits. Selon l'invention, en conditions normales d'utilisation, c'est-à-dire en dehors d'un épisode de déformation de la poutre, les absorbeurs peuvent être au contact du plancher ou non. Comme nous allons le voir en détail, l'invention est également remarquable en ce que le dispositif d'absorption s'adapte très facilement aux différentes formes et tailles de poutres centrales.

Selon un second aspect de l'invention, le dispositif d'absorption peut comprendre des absorbeurs centraux disposés selon l'axe longitudinal de la poutre et/ou des absorbeurs latéraux disposés par paire. Les éléments d'une paire sont placés symétriquement de chaque côté de l'axe longitudinal de la poutre. De préférence, le dispositif d'absorption comprend au moins une paire d'absorbeurs latéraux. De préférence encore, le dispositif d'absorption comprend la combinaison d'au moins une paire d'absorbeur latéraux et d'au moins un absorbeur central.

Ainsi selon un mode de réalisation préféré de l'invention, le dispositif d'absorption comprend au moins une paire d'absorbeurs, les absorbeurs de la ou de chaque paire étant disposés symétriquement de part et d'autre de l'axe longitudinal de la poutre centrale de sorte à former une paire d'absorbeurs latéraux. De préférence, les absorbeurs latéraux sont disposés intégralement ou au moins en partie sous la poutre centrale. La présence d'au moins un absorbeur de chaque côté de la poutre centrale assure une absorption des efforts équilibrés au niveau desdits côtés et limite les risques que la déformation de la poutre centrale ne la fasse pencher sur un de ses côtés la mettant en contact avec le plancher.

Selon un mode de réalisation de l'invention complémentaire ou alternatif au précédent, le dispositif d'absorption comprend au moins absorbeur positionné le long de l'axe longitudinal de la poutre centrale, de sorte à former un absorbeur central. Ce ou ces absorbeurs centraux sont donc centrés par rapport à l'axe transversal de la poutre centrale. Les absorbeurs centraux peuvent être disposés intégralement ou au moins en partie sous la poutre centrale. Lorsque les absorbeurs centraux sont disposés en partie sous la poutre centrale ils présentent une longueur selon l'axe transversal du véhicule qui est supérieure à celle de la largeur de la poutre. Selon une variante de l'invention, la longueur selon l'axe transversal du véhicule du ou d'au moins un des absorbeurs centraux est inférieure ou égale à la largeur de la poutre centrale.

Selon un mode de réalisation préféré de l'invention, le dispositif d'absorption comprend au moins un absorbeur central positionné entre deux absorbeurs latéraux ou s'étendant entre au moins deux paires d'absorbeurs latéraux. La présence de tels absorbeurs centraux apporte de la raideur verticale au dispositif d'absorption et permet de participer au contrôle de la cinétique d'écrasement des absorbeurs.

Selon un mode particulier de réalisation de l'invention, au moins un des absorbeurs est fixé à la poutre centrale. De préférence, le ou les absorbeurs sont fixés par rivetage à la poutre centrale. L'invention permet ainsi une solidarisation entre les absorbeurs et la poutre centrale qui assure un maintien en position de ces derniers et une meilleure absorption de l'effort.

Selon un mode particulier de réalisation de l'invention, le ou les absorbeurs comprennent des parois latérales, une base et un sommet, et le ou au moins un des absorbeurs présente des parois latérales s'évasant depuis son sommet jusqu'à sa base. Ainsi l'invention permet de contrôler la cinétique d'écrasement des absorbeurs et d'assurer une résistance progressive à l'écrasement afin de mieux dissiper l'énergie provenant de la déformation de la poutre centrale.

Selon un mode préféré de réalisation de l'invention, le dispositif d'absorption comprend en outre une semelle portant le ou les absorbeurs.

Ainsi et selon un troisième aspect, le dispositif d'absorption de l'invention comprend un support (à savoir la semelle) sur lequel sont disposés les absorbeurs. La mise sur support permet d'améliorer leur maintien en position et donc leur capacité d'absorption des efforts. Lorsque les absorbeurs sont également fixés à la poutre centrale, le dispositif de l'invention a pour effet additionnel d'ajouter de la raideur à la poutre centrale et permet un guidage de sa déformation.

De préférence, le dispositif d'absorption comprend en outre au moins une butée positionnée sur la semelle, entre deux absorbeurs, de préférence la ou les butées ont une hauteur inférieure à celle d'au moins un absorbeur. La présence de telles butées permet avantageusement une montée en effort lors de l'écrasement des absorbeurs afin de mieux contrôler leur cinétique d'écrasement.

Selon un mode préféré de réalisation de l'invention, la semelle présente au moins un ajourage réalisé entre au moins deux absorbeurs. De préférence, le dispositif d'absorption comprend au moins un ajourage réalisé entre au moins deux paires d'absorbeurs latéraux, les paires étant adjacentes. La présence de tels ajourages permet de contrôler la raideur qu'apporte le dispositif de l'invention à la poutre centrale afin que cette dernière puisse absorber efficacement l'énergie du choc arrière.

De préférence, le dispositif d'absorption comprend une extrémité avant et une extrémité arrière selon la direction longitudinale du véhicule, et la semelle comprend au moins deux ajourages configurés pour que le ou au moins un des ajourages situés les plus proches de l'extrémité avant du dispositif d'absorption présente une longueur plus importante que celui ou ceux situés plus proches de l'extrémité arrière dudit dispositif d'absorption. Ainsi, le dispositif d'absorption présente un profil de déformation similaire à celui de la poutre centrale. En effet, suite à un choc arrière, il a été observé que la poutre centrale montre une déformation plus prononcée au niveau de son extrémité avant que de son extrémité arrière. La différence de taille des ajourages présents en regard de la partie avant de la poutre centrale permet au dispositif d'absorption de se déformer plus facilement dans sa partie avant et d'accompagner la déformation de la poutre centrale. Ici encore, l'intention est de mettre en adéquation la déformation longitudinale du dispositif d'absorption avec celle de la poutre centrale afin d'accompagner cette dernière dans son absorption de l'énergie du choc arrière.

Selon un mode particulier de réalisation de l'invention, au moins un absorbeur est venu de matière avec la semelle du dispositif d'absorption.

L'invention concerne également un dispositif d'absorption pour poutre centrale de châssis arrière de véhicule tel que défini plus haut.

L'invention sera bien comprise et d'autres aspects et avantages apparaîtront clairement à la lecture de la description qui suit, donnée à titre d'exemple en référence aux planches de dessins annexées sur lesquelles :
- La figure 1 représente une vue de haut du châssis arrière d'un véhicule selon l'invention comprenant une poutre centrale montée sur un dispositif d'absorption selon l'invention.
- La figure 2 représente une vue partielle de profil d'une poutre centrale montée sur un dispositif d'absorption selon l'invention.
- La figure 3 représente une vue en perspective d'un dispositif d'absorption selon l'invention.

Dans la description qui suit, le terme « comprendre » est synonyme de « inclure » et n'est pas limitatif en ce qu'il autorise la présence d'autres éléments dans le véhicule ou le dispositif d'absorption auquel il se rapporte. Il est entendu que le terme « comprendre » inclut les termes « consister en ». Les termes « avant » et « arrière » ainsi que les directions « longitudinale » et « transversale » s'entendront par rapport à l'orientation générale du véhicule. Le terme « inférieur» indiquera une proximité avec le sol plus importante que le terme « supérieur». Sur les différentes figures, les mêmes références désignent des éléments identiques ou similaires.

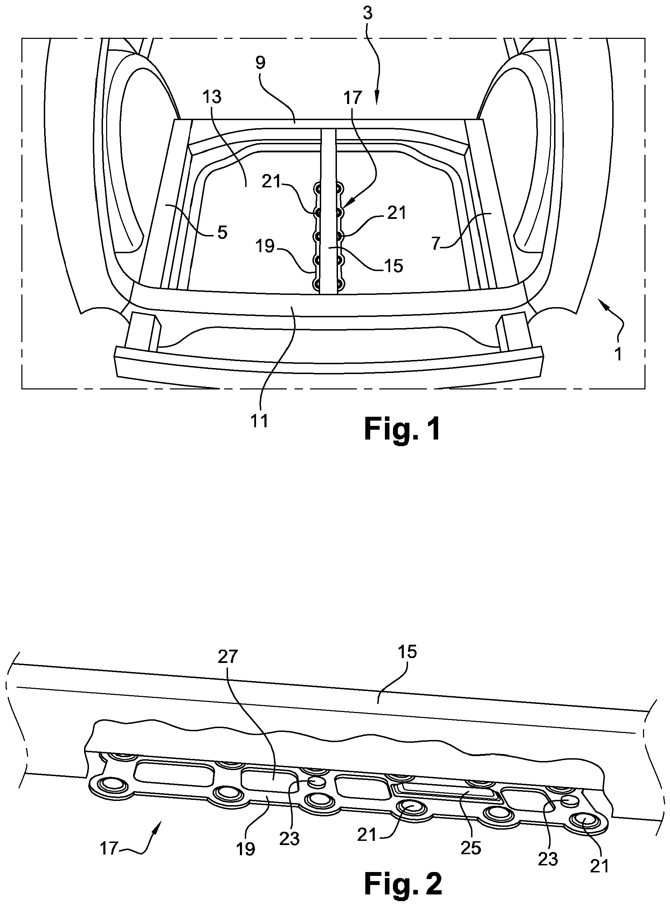

On se référera en premier lieu à la figure 1, qui représente une vue arrière supérieure d'un véhicule 1 selon l'invention, et qui montre un châssis arrière 3 comprenant deux poutres latérales (5, 7) orientées selon la direction longitudinale du véhicule 1. Ces deux poutres (5,7) sont reliées entre elles par deux traverses (9, 11) dont une est située proche des extrémités arrière des deux poutres latérales (5, 7) et l'autre est placée plus en avant. Dans l'exemple représenté, l'espace défini et supporté par les deux poutres latérales (5,7) et les deux traverses (9, 11) correspond au coffre du véhicule 1. Cet espace est fermé en partie inférieure par un plancher inférieur 13. Une poutre centrale 15 est disposée entre les deux poutres latérales (5, 7) et s'étend parallèlement à elles. La poutre centrale 15 comprend une extrémité avant reliée à la traverse avant 9 et une extrémité arrière reliée à la traverse 11 arrière.

Le véhicule 1 est remarquable en ce qu'il comprend en outre un dispositif d'absorption 17 agencé entre la poutre centrale 15 et le plancher inférieur 13 et comprenant au moins un absorbeur (21, 25).

Le dispositif d'absorption 17 de l'invention est donc positionné entre la poutre centrale 15 et le plancher inférieur 13 afin d'amortir les efforts que transmet la poutre centrale 15 au plancher 13 lors de sa déformation causée par un choc arrière au véhicule 1.

Selon un mode de réalisation de l'invention, le ou les absorbeurs sont positionnés centralement par rapport à l'axe transversal de la poutre centrale. De préférence, la longueur du ou d'au moins un des absorbeurs centraux correspond au moins à la largeur de la poutre centrale. Les absorbeurs centraux peuvent présenter une forme oblongue et être disposés parallèlement à l'axe longitudinal de la poutre centrale, ou perpendiculairement à celui-ci.

Selon un mode de réalisation préféré de l'invention, le dispositif d'absorption 17 comprend au moins une paire d'absorbeurs 21 qui sont latéraux, les absorbeurs de la ou de chaque paire étant disposé symétriquement de part et d'autre de l'axe longitudinal de la poutre centrale 15. De préférence, le dispositif d'absorption 17 comprend au moins deux paires d'absorbeurs, de préférence encore au moins quatre paires d'absorbeurs, préférentiellement il comprend six paires d'absorbeurs. Les absorbeurs peuvent être sous ou au moins en partie sous la poutre centrale.

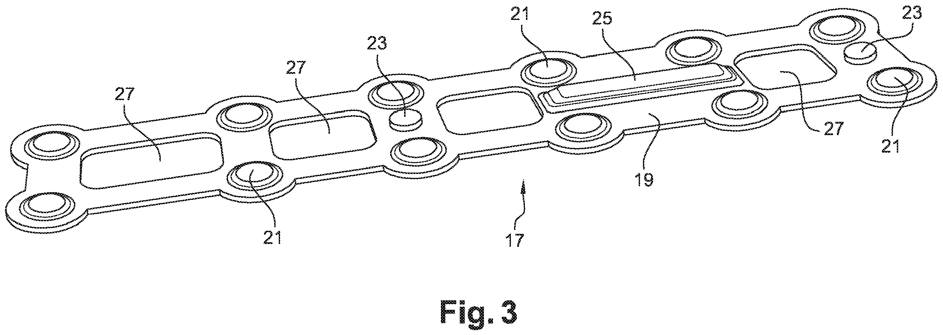

Selon un mode de réalisation encore plus préféré de l'invention, le dispositif d'absorption 17 comprend une combinaison d'absorbeurs centraux et latéraux. De préférence, au moins un absorbeur central 25 est positionné entre deux absorbeurs 21 latéraux d'une même paire ou s'étend entre au moins deux paires d'absorbeurs 21 latéraux.
On se tournera à présent vers les figures 2 et 3 qui seront lues ensemble. La figure 2 est une représentation d'une poutre centrale 15 à laquelle est fixé un dispositif d'absorption 17 selon l'invention. La figure 3 est une vue en perspective d'un dispositif d'absorption 17 selon l'invention seul. Que les absorbeurs (21, 25) soient positionnés centralement ou latéralement par rapport à la poutre centrale 15, ils ont de préférence une forme s'évasant depuis leur sommet jusqu'à la base. Par exemple, les absorbeurs (21, 25) peuvent avoir une forme demi-sphérique ou une forme oblongue. La différence de taille entre la base et le sommet des absorbeurs (21, 25) contribue à leur résistance à l'écrasement et l'absorption progressive de l'effort transmis par la poutre centrale se déformant. Les absorbeurs peuvent être de même hauteur ou présenter des hauteurs différentes, de préférence tous les absorbeurs (21, 25) ont la même hauteur.

De préférence, le ou les absorbeurs (21, 25) sont fixés à la poutre centrale 15. Alternativement, le ou les absorbeurs sont fixés au plancher inférieur. Le ou les absorbeurs (21, 25) peuvent être fixés aussi bien par leur base que leur sommet à la poutre centrale. Lorsque le dispositif d'absorption comprend une semelle 19, le ou les absorbeurs (21, 25) sont préférentiellement fixés par leur sommet à la poutre centrale 15.

La fixation du ou des absorbeurs (21, 25) à la poutre centrale 15 est réalisée par tout moyen et peut être réalisée par exemple par soudage. De préférence, la fixation est réalisée par rivetage. A cet effet, au moins un absorbeur (21, 25) comprend à son sommet un orifice (non représenté) et la poutre centrale 15 comprend un orifice positionné en regard. Il est peut également être utilisé des rivets autopoinçonneurs qui ne nécessitent pas la mise en place préalable d'orifices au niveau de l'absorbeur et de la poutre centrale, mais sont directement enfoncés dans ces deux éléments.

Selon un mode de réalisation préféré de l'invention, le dispositif d'absorption 17 comprend en outre une semelle 19 sur laquelle sont disposés le ou les absorbeurs (21, 25). Comme il est visible sur la figure 3, la semelle 19 présente de préférence une forme plane. La semelle du dispositif d'absorption étant vouée à être déformée, elle est avantageusement formée dans un matériau déformable, tel que de l'aluminium. La semelle peut être fixée au plancher inférieur.

Le ou les absorbeurs (21, 25) peuvent être fixés sur la semelle 19 du dispositif d'absorption 17 ou venus de matière avec elle. Lorsque le ou les absorbeurs (21, 25) sont fixés sur la semelle 19 du dispositif d'absorption 17, ils peuvent être dans le même matériau que la semelle 19 ou formés dans un matériau différent tel qu'une mousse choisie parmi une mousse de polyéther, de polyester, de polypropylène, de polyéthylène ou de polyuréthane, de préférence en mousse de polyéthylène. Alternativement, les absorbeurs (21, 25) peuvent être venus de matière avec la semelle 19 du dispositif d'absorption 17 et être formés par emboutissage, et la semelle 19 peut être formée par découpage de la plaque de tôle dans laquelle sont emboutis les absorbeurs (21, 25).

Selon un mode de réalisation préféré de l'invention, le dispositif d'absorption 17 comprend en outre au moins une butée 23 positionnée entre au moins deux d'absorbeurs (21, 25). Dans l'exemple représenté, la ou les butées 23 sont positionnées entre deux absorbeurs 21 latéraux d'une même paire, mais cette ou ces butées peuvent également être disposées entre deux absorbeurs 25 centraux. De préférence, la ou au moins une des butées 23 est positionnée le long de l'axe longitudinal de la poutre centrale 15. De préférence encore, les parois latérales de la ou d'au moins une des butées 23 sont verticales. Le rôle de cette ou de ces butées 23 est de participer au contrôle de la cinétique d'écrasement des absorbeurs (21, 25) en créant une résistance à l'écrasement et donc une montée d'effort.

La ou les butées 23 peuvent être fixées à la semelle 19 du dispositif d'absorption 17 ou venues de matière avec. Lorsque la ou les butées 23 sont fixées à la semelle 19 du dispositif d'absorption 17, elles peuvent être dans le même matériau que la semelle 19 ou dans un matériau différent tel que défini précédemment pour les absorbeurs (21, 25). Alternativement et de manière similaire aux absorbeurs (21, 25), la ou les butées 23 peuvent être embouties dans la semelle 19 du dispositif d'absorption 17 et donc venues de matière avec la semelle 19.

De préférence, la ou au moins une des butées 23 a une hauteur inférieure à celle d'au moins un des absorbeurs (21, 25) de sorte à ne pas être en contact la poutre centrale 15.

Selon un autre mode de réalisation de l'invention, la semelle 19 présente au moins un ajourage 27 réalisé entre au moins deux absorbeurs (21, 25). De préférence, au moins un ajourage 27 est réalisé entre au moins deux paires d'absorbeurs 21 latéraux, les paires étant adjacentes. Ainsi, un pont de matière formé par la semelle 19 relie deux absorbeurs 21 latéraux d'une même paire, augmentant la résistance du dispositif d'absorption 17 aux distorsions transversales pouvant impacter l'efficacité d'absorption des absorbeurs 21 latéraux. De préférence, un seul ajourage 27 est réalisé entre deux paires d'absorbeurs 21 latéraux et la semelle 19 comprend au moins deux ajourages 27, et de préférence elle comprend quatre ajourages 27.

De préférence, le ou au moins un des ajourages 27 situés plus proches de l'extrémité avant du dispositif d'absorption 17 par rapport à la direction longitudinale du véhicule 1 présentent une longueur plus importante que celui ou ceux situés plus proches de l'extrémité arrière du dispositif d'absorption 17.

## Revendications

1. Véhicule (1) comprenant un châssis arrière (3) présentant deux poutres latérales (5, 7) orientées selon la direction longitudinale du véhicule (1) et reliées entre elles par au moins deux traverses (9, 11) réparties selon la direction longitudinal du véhicule (1), les deux traverses (9, 11) les plus en arrière étant reliées entre elles par une poutre centrale (15), et l'espace défini par les traverses (9, 11) et les poutres latérales (5, 7) étant fermé en partie inférieure par un plancher inférieur (13), le véhicule (1) étant **caractérisé en ce qu'**il comprend en outre un dispositif d'absorption (17) disposé entre la poutre centrale (15) et le plancher inférieur (13) et comprenant au moins un absorbeur (21, 25).

2. Véhicule (1) selon la revendication 1, **caractérisé en ce que** le dispositif d'absorption (17) comprend au moins une paire d'absorbeurs (21), les absorbeurs (21) de la ou de chaque paire étant disposés symétriquement de part et d'autre de l'axe longitudinal de la poutre centrale (15) de sorte à former une paire d'absorbeurs (21) latéraux, de préférence, les absorbeurs (21) latéraux sont disposés intégralement ou au moins en partie sous la poutre centrale (15).

3. Véhicule (1) selon l'une des revendications 1 ou 2, **caractérisé en ce que** le dispositif d'absorption (17) comprend au moins un absorbeur (25) positionné le long de l'axe longitudinal de la poutre centrale, de sorte à former un absorbeur (25) central.

4. Véhicule (1) selon l'une des revendications 1 à 3, **caractérisé en ce que** le ou les absorbeurs (21, 25) comprennent des parois latérales, une base et un sommet, et **en ce que** le ou au moins un des absorbeurs (21, 25) présente des parois latérales s'évasant depuis son sommet jusqu'à sa base.

5. Véhicule (1) selon l'une des revendications 1 à 4, **caractérisé en ce qu'**au moins un des absorbeurs (21, 25) est fixé à la poutre centrale (15), de préférence au moins un des absorbeurs (21, 25) est fixé par rivetage à la poutre centrale (15).

6. Véhicule (1) selon l'une des revendications 1 à 5, **caractérisé en ce que** le dispositif d'absorption (17) comprend en outre une semelle (19) portant le ou les absorbeurs (21, 25).

7. Véhicule (1) selon la revendication 6, **caractérisé en ce que** la semelle (19) présente au moins un ajourage (27) réalisé entre au moins deux absorbeurs (21, 25).

8. Véhicule (1) selon la revendication 6 ou 7, **caractérisé en ce qu'**au moins un absorbeur (21) est venu de matière avec la semelle (19) du dispositif d'absorption (17).

9. Véhicule (1) selon l'une des revendications 6 à 8, **caractérisé en ce que** le dispositif d'absorption (17) comprend en outre au moins une butée (23) positionnée sur la semelle (19), entre deux absorbeurs (21), de préférence la ou les butées (23) ont une hauteur inférieure à celle d'au moins un absorbeur (21, 25).

10. Dispositif d'absorption (17) pour poutre centrale (15) de châssis arrière (3) de véhicule (1) selon l'une des revendications 1 à 9.

## Patentansprüche

1. Fahrzeug (1) mit einem hinteren Fahrgestell (3), das zwei in Fahrzeuglängsrichtung (1) ausgerichtete Seitenbalken (5, 7) aufweist, die durch mindestens zwei in Fahrzeuglängsrichtung (1) verteilte Querträger (9, 11) miteinander verbunden sind, wobei die beiden hintersten Querträger (9, 11) durch einen Mittelträger (15) miteinander verbunden sind und der durch die Zwischenräume Träger (9, 11) und Seitenträger (5, 7) sind im unteren Teil durch einen unteren Boden (13) verschlossen, wobei das Fahrzeug (1) ferner eine Absorptionseinrichtung (17) aufweist, die zwischen dem mittleren Träger (15) und dem unteren Boden (13) angeordnet ist und mindestens einen Absorber (21, 25) aufweist.

2. Fahrzeug (1) nach Anspruch 1, **dadurch gekennzeichnet, dass** die Absorptionseinrichtung (17) mindestens ein Paar Absorber (21) umfasst, wobei die Absorber (21) des oder jedes Paares symmetrisch auf beiden Seiten der Längsachse des Mittelträgers (15) angeordnet sind, sodass ein vorzugsweise seitliches Paar Absorber (21) gebildet wird, Seitliche Absorber (21) sind integral oder zumindest teilweise unterhalb des Mittelträgers (15) angeordnet.

3. Fahrzeug (1) nach einem der Ansprüche 1 oder 2, **dadurch gekennzeichnet, dass** die Absorptionseinrichtung (17) mindestens einen Absorber (25) umfasst, der entlang der Längsachse des Mittelträgers positioniert ist, um einen zentralen Absorber (25) zu bilden.

4. Fahrzeug (1) nach einem der Ansprüche 1 bis 3, **dadurch gekennzeichnet, dass** der oder die Absorber (21, 25) Seitenwände, eine Basis und einen Scheitelpunkt umfassen und dass der oder zumindest einer der Absorber (21, 25) Seitenwände aufweist, die sich von seiner Spitze zu seiner Basis erstrecken.

5. Fahrzeug (1) nach einem der Ansprüche 1 bis 4, **dadurch gekennzeichnet, dass** mindestens einer der Absorber (21, 25) am Mittelträger (15) befestigt ist, vorzugsweise mindestens einer der Absorber (21, 25) an dem Mittelträger (15) vernietbar befestigt ist.

6. Fahrzeug (1) nach einem der Ansprüche 1 bis 5, **dadurch gekennzeichnet, dass** die Absorptionseinrichtung (17) ferner eine Sohle (19) umfasst, die den oder die Absorber (21, 25) trägt.

7. Fahrzeug (1) nach Anspruch 6, **dadurch gekennzeichnet, dass** die Sohle (19) mindestens eine zwischen mindestens zwei Absorbern (21, 25) ausgebildete Durchbrechung (27) aufweist.

8. Fahrzeug (1) nach Anspruch 6 oder 7, **dadurch gekennzeichnet, dass** mindestens ein Absorber (21) mit der Sohle (19) der Absorptionseinrichtung (17) materialbezogen ist.

9. Fahrzeug (1) nach einem der Ansprüche 6 bis 8, **dadurch gekennzeichnet, dass** die Absorptionseinrichtung (17) ferner mindestens einen an der Sohle (19) angeordneten Anschlag (23) umfasst, der zwischen zwei Absorbern (21) angeordnet ist, wobei vorzugsweise der oder die Anschläge (23) eine geringere Höhe aufweisen als die mindestens eine Absorptionseinrichtung (21, 25).

10. Absorptionsvorrichtung (17) für einen Mittelträger (15) eines hinteren Fahrgestells (3) eines Fahrzeugs (1) nach einem der Ansprüche 1 bis 9.

## Claims

1. Vehicle (1) consisting of a rear frame (3) having two side beams (5, 7) oriented in the longitudinal direction of the vehicle (1) and connected with each other by at least two ties (9, 11) distributed in the longitudinal direction of the vehicle (1), the two backmost ties (9, 11) connected by a central beam (15), and the space defined by the crossings its (9, 11) and side beams (5, 7) being closed in part by a lower floor (13), the vehicle (1) being **characterized in that** it also includes an absorption device (17) placed between the center beam (15) and the lower floor (13) and comprising at least one absorber (21, 25).

2. Vehicle (1) according to Claim 1, characterized that the absorption device (17) includes at least one pair of absorbers (21), the absorbers (21) of the pair(s) being arranged symmetrically on both sides of the longitudinal axis of the central beam (15) so as to form a pair of side absorbers (21) preferably, the lateral absorbers (21) are placed in full or at least in part under the central beam (15).

3. Vehicle (1) according to one of claims 1 or 2, characterized that the absorption device (17) includes at least one absorber (25) positioned along the longitudinal axis of the central beam, so as to form a central absorber (25).

4. Vehicle (1) according to one of the claims 1 to 3, **characterized by** that the absorber(s) (21, 25) includes side walls, a base and a top, and that one or at least one of the absorbers (21, 25) has side walls that escape from the top to the bottom.

5. Vehicle (1) according to one of the claims 1 to 4, characterized that at least one of the absorbers (21, 25) is attached to the central beam (15), preferably at least one of the absorbers (21, 25) is fixed by riveting to the central beam (15).

6. Vehicle (1) according to one of the claims 1 to 5, **characterized by** the fact that the absorption device (17) also includes a sole (19) bearing the absorber(s) (21, 25).

7. Vehicle (1) according to claim 6, characterized as the sole (19) has at least one offset (27) made between at least two absorbers (21, 25).

8. Vehicle (1) according to claim 6 or 7, characterized that at least one absorber (21) came from material with the sole (19) of the absorption device (17).

9. Vehicle (1) according to one of claims 6 to 8, characterized that the absorption device (17) also includes at least one stop (23) positioned on the sole (19), between two absorbers (21), preferably the nozzle(s) (23) has a height lower than at least one absorber (21, 25).

10. Absorption device (17) for center beam (15) of rear chassis (3) of vehicle (1) according to one of the claims 1 to 9.
